# EUROPEAN PATENT APPLICATION

(11) **EP 2 508 725 A1**
(43) Date of publication of application: **10.10.2012**
(21) Application number: 09851871.5
(22) Date of filing: 01.12.2009
(51) Int. Cl.: F01N 3/28, B01D 53/72, B01D 53/86, F01N 3/10

(54) **EXHAUST PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: SOBUE, Yuichi, Toyota-shi Aichi 471-8571 (JP); IMAI, Daichi, Toyota-shi Aichi 471-8571 (JP); OSHIKAWA, Katsuhiko, Toyota-shi Aichi 471-8571 (JP); OTSUKI, Hiroshi, Toyota-shi Aichi 471-8571 (JP); ASANUMA, Takamitsu, Toyota-shi Aichi 471-8571 (JP); SUGAWARA, Kou, Toyota-shi Aichi 471-8571 (JP)
(74) Representative: TBK
(86) International application number: PCT/JP2009/070445
(87) International publication number: WO 2011/067863

(57) **Abstract**

An exhaust purification system of an internal combustion engine which is controlled so that a combustion air-fuel ratio becomes lean at the time of ordinary operation, provided with an adsorption part 51 which adsorb unburned fuel which is contained in exhaust gas and an oxidation part 52 which has catalyst particles of a metal which oxidizes carbon monoxide. The adsorption part 51 includes zeolite 61 which substantially adsorbs the lower olefins which are contained in the exhaust gas. The adsorption part 51 and the oxidation part 52 are arranged so that the exhaust gas contacts the adsorption part 51, then contacts the oxidation part 52.

## Description

### Technical Field

The present invention relates to an exhaust purification system of an internal combustion engine.

### Background Art

Exhaust gas of a diesel engine, gasoline engine, or other internal combustion engine, for example, contains carbon monoxide (CO), unburned fuel (HC), nitrogen oxides (NOₓ), particulate matter (PM), and other constituents. An exhaust purification system of an internal combustion engine is provided with an exhaust treatment device for removing these constituents.

Among the constituents contained in exhaust gas, nitrogen oxides are removed by an exhaust treatment device which reduces the nitrogen oxides. The particulate matter is removed by an exhaust treatment device which traps the particulate matter. On the other hand, carbon monoxide and unburned fuel are removed by exhaust treatment devices for oxidizing these substances. For example, the engine exhaust passage has an oxidation catalyst or three-way catalyst arranged in it.

In the WO00/27508 pamphlet, an exhaust gas purification method is disclosed which brings exhaust gas reduced in concentration of HC into contact with an oxidation/reduction catalyst comprised of an oxygen storing material carrying at least one type of element of rhodium and palladium so as to suppress the exhaust of HC to a high degree from the low temperature region to the high temperature region.

Further, in Japanese Patent Publication (A) No. 7-166852, an exhaust purification device which is provided with zeolite and a main converter, the zeolite having a maximum pore aperture larger than 5.6 angstroms, and including non-frame structure anions selected from copper or other ions is disclosed. It is disclosed that this exhaust purification device effectively converts the unburned hydrocarbons contained in the exhaust gas which is exhausted from the engine, in particular low molecular weight alkenes.

### Citations List

### Patent Literature

PLT 1: WO00/27508 pamphlet
PLT 2: Japanese Patent Publication (A) No. 7-166852

### Summary of Invention

### Technical Problem

The above WO00/275 pamphlet discloses an internal combustion engine which controls the air-fuel ratio at the time the fuel is burned to the stoichiometric air-fuel ratio at the time of ordinary operation. The exhaust purification system includes a three-way catalyst for oxidizing the unburned fuel or other substance to be oxidized. A three-way catalyst is a catalyst which simultaneously performs an oxidation reaction and a reduction reaction. The three-way catalyst can remove the unburned fuel, carbon monoxide, and nitrogen oxides by a high purification rate at the vicinity where the air-fuel ratio of the exhaust gas is the stoichiometric air-fuel ratio.

The exhaust purification system which is disclosed in this publication includes a three-way catalyst which has an oxygen storage/release material and an HC adsorption material. The adsorption action and release action of the unburned fuel by the HC adsorption material and the storage action and release action of the oxygen by the oxygen storage/release material enable the surface of the three-way catalyst to be constantly held near the stoichiometric air-fuel ratio. For this reason, it is disclosed that a high purification rate can be maintained.

An internal combustion engine includes a device which controls the air-fuel ratio at the time of combustion in the combustion chambers at the time of ordinary operation to be lean. In this internal combustion engine, at the time of ordinary operation, the air-fuel ratio of the exhaust gas which flows into the exhaust purification system becomes lean. The carbon monoxide is oxidized at the oxidation catalyst and is converted to carbon dioxide. In this regard, in the exhaust gas, carbon monoxide and unburned fuel are copresent. Sometimes the unburned fuel obstructed the oxidation of the carbon monoxide.

In recent years, the demands on the amount of release of carbon dioxide have been becoming stricter. To reduce the amount of release of carbon dioxide, reducing the amount of fuel burned is being studied. In this regard, if reducing the amount of fuel burned, the temperature of the exhaust gas will fall. If the temperature of the exhaust gas falls, there is the problem that the catalyst temperature will fall and the efficiency of removal of carbon monoxide will fall.

The present invention has as its object to provide an exhaust purification system of an internal combustion engine which can give a high purification rate of carbon monoxide from the low temperature region.

### Solution to Problem

The exhaust purification system of an internal combustion engine of the present invention is an exhaust purification system of an internal combustion engine which is controlled so that an air-fuel ratio at the time of combustion at the time of ordinary operation where an engine body outputs a torque becomes lean, which includes an adsorption part which adsorbs unburned fuel which is contained in exhaust gas when a temperature is less than a release temperature of the unburned fuel and releases the unburned fuel when the temperature is the release temperature of the unburned fuel or more and an oxidation part which has catalyst particles of a metal which oxidizes carbon monoxide which is contained in the exhaust gas. The adsorption part includes zeolite which substantially adsorbs lower olefin which is contained in the exhaust gas. The adsorption part and the oxidation part are arranged so that the exhaust gas contacts the adsorption part, then contacts the oxidation part.

In the above invention, the adsorption part and the oxidation part can be stacked on the surface of a base member, and the oxidation part can be arranged at a side farther from an engine exhaust passage than the adsorption part.

In the above invention, the adsorption part and the oxidation part can be arranged along the direction of flow of the exhaust gas, and the oxidation part can be arranged at a downstream side from the adsorption part in the direction of flow of the exhaust gas.

In the above invention, preferably the adsorption part includes a higher hydrocarbon adsorption part which adsorbs higher hydrocarbons and a lower olefin adsorption part which adsorbs lower olefins, and the higher hydrocarbon adsorption part and lower olefin adsorption part are arranged so that the exhaust gas contacts the higher hydrocarbon adsorption part, then contacts the lower olefin adsorption part.

In the above invention, preferably the higher hydrocarbon adsorption part includes β-zeolite, and the lower olefin adsorption part includes zeolite which has exchanged ions with a metal.

In the above invention, the metal particles of the oxidation part may be mainly comprised of platinum.

In the above invention, the metal particles of the oxidation part can be formed substantially all from platinum.

In the above invention, preferably the zeolite, which substantially adsorbs the lower olefins includes at least one of ZMS5 which has exchanged ions with iron and ZMS5 which has exchanged ions with silver.

In the above invention, the catalyst particles of the metal of the oxidation part can be comprised of metal particles other than metal particles which have an oxygen storage ability.

### Advantageous Effects of Invention

According to the present invention, it is possible to provide an exhaust purification system for obtaining a high carbon monoxide purification rate from a low temperature region

### Brief Description of Drawings

FIG. 1A schematic view of an internal combustion engine in an embodiment.
FIG. 2 A schematic cross-sectional view of a first exhaust treatment device in the embodiment.
FIG. 3 An enlarged schematic cross-sectional view of the first exhaust treatment device in the embodiment.
FIG 4 A graph showing the relationship between a temperature of an oxidation catalyst and a purification rate of carbon monoxide.
FIG. 5 A graph of a temperature which purifies exhaust of 50% of carbon monoxide in an exhaust treatment device of Example 1 and exhaust treatment devices of comparative examples.
FIG. 6 An enlarged schematic cross-sectional view of an exhaust treatment device of Comparative Example 1 in the embodiment.
FIG. 7 An enlarged schematic cross-sectional view of an exhaust treatment device of Comparative Example 2 in the embodiment.
FIG. 8 An enlarged schematic cross-sectional view of an exhaust treatment device of Comparative Example 3 in the embodiment.
FIG. 9 An enlarged schematic cross-sectional view of a second exhaust treatment device in the embodiment.
FIG. 10 A graph of an amount of exhaust of carbon monoxide of an exhaust treatment device of Example 1 and an exhaust treatment device of Example 2 and of exhaust treatment devices of comparative examples.
FIG. 11 An enlarged schematic cross-sectional view of an exhaust treatment device of Comparative Example 4 in the embodiment.
FIG. 12 A graph showing the relationship between types of zeolite and an amount of exhaust of carbon monoxide in the embodiment.
FIG. 13 A graph of a temperature which purifies exhaust of 50% of carbon monoxide in an exhaust treatment device of Example 3 and an exhaust treatment device of a comparative example.
FIG. 14 An enlarged schematic cross-sectional view of a fourth exhaust treatment device in the embodiment.
FIG. 15 An enlarged schematic cross-sectional view of a fifth exhaust treatment device in the embodiment.
FIG. 16 A graph of an amount of exhaust of carbon monoxide of exhaust treatment devices of Example 4 and Example 5 and exhaust treatment devices of comparative examples.
FIG. 17 An enlarged schematic cross-sectional view of an exhaust treatment device of Comparative Example 6 in the embodiment.
FIG. 18 An enlarged schematic cross-sectional view of a sixth exhaust treatment device in the embodiment.

### Description of Embodiments

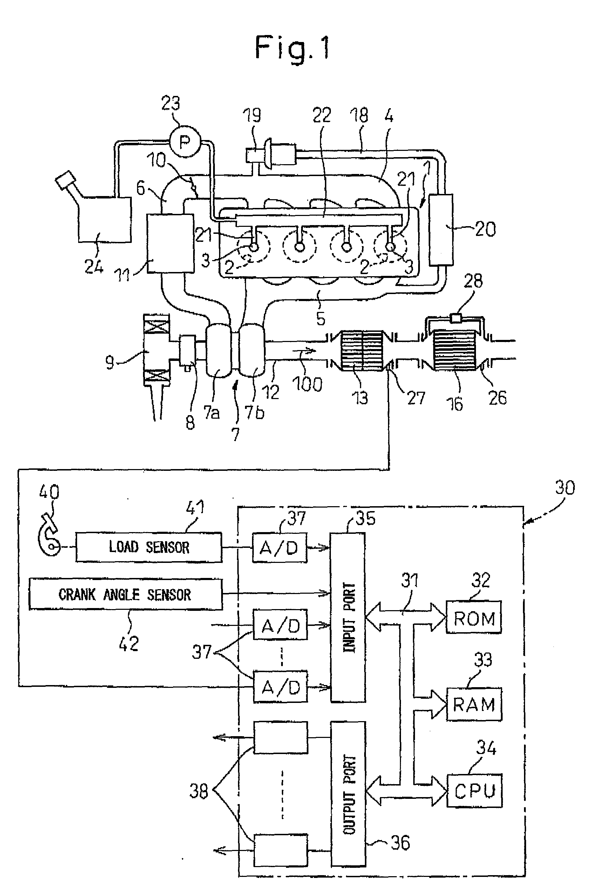

Referring to FIG. 1 to FIG. 18, an exhaust purification system of an internal combustion engine in an embodiment will be explained. The internal combustion engine in the present embodiment is mounted in a vehicle.

In the present embodiment, the explanation will be given with reference to the example of a compression ignition type of diesel engine.

FIG. 1 shows an overall view of an internal combustion engine in the present embodiment. The internal combustion engine is provided with an engine body 1. Further, the internal combustion engine is provided with an exhaust purification system which purifies exhaust gas. The engine body 1 includes combustion chambers 2 as cylinders, electronic control type fuel injectors 3 which inject fuel into the respective combustion chambers 2, an intake manifold 4, and an exhaust manifold 5.

The intake manifold 4 is connected through an intake duct 6 to an outlet of a compressor 7a of an exhaust turbocharger 7. The inlet of the compressor 7a is connected through an intake air detector 8 to an air cleaner 9. Inside the intake duct 6, a throttle valve 10 which is driven by a step motor is arranged. Further, in the intake duct 6, a cooling device 11 for cooling the intake air which flows through the inside of the intake duct 6 is arranged. In the example which is shown in FIG. 1, engine cooling water is led to the cooling device 11. The engine cooling water is used to cool the intake air.

The exhaust manifold 5 is connected to an inlet of an exhaust turbine 7b of the exhaust turbocharger 7. The exhaust purification system in the present embodiment is provided with an exhaust treatment device 13 for oxidizing unburned fuel and carbon monoxide and other substances which should be oxidized. The exhaust treatment device 13 is connected to an outlet of the exhaust turbine 7b through an exhaust pipe 12. Inside of the engine exhaust passage downstream of the exhaust treatment device 13, a particulate filter 16 for trapping particulate matter in the exhaust gas is arranged. The exhaust gas flows along the engine exhaust passage as shown by the arrows 100.

Between the exhaust manifold 5 and the intake manifold 4, an exhaust gas recirculation (EGR) passage 18 is arranged for EGR. In the EGR passage 18, an electronic control type EGR control valve 19 is arranged. Further, in the EGR passage 18, a cooling device 20 for cooling the EGR gas which flows through the inside of the EGR passage 18 is arranged. In the example which is shown in FIG. 1, engine cooling water is guided to the inside of the cooling device 20. The engine cooling water is used to cool the EGR gas.

The respective fuel injectors 3 are connected through fuel feed pipes 21 to a common rail 22. The common rail 22 is connected through an electronic control type variable discharge fuel pump 23 to a fuel tank 24. The fuel which is stored in the fuel tank 24 is fed by the fuel pump 23 to the inside of the common rail 22. The fuel which is fed into the common rail 22 is fed through the respective fuel feed pipes 21 to the fuel injectors 3.

The electronic control unit 30 includes a digital computer. The electronic control unit 30 in the present embodiment functions as a control device of the exhaust purification system. The electronic control unit 30 includes components which are connected to each other by a bidirectional bus 31 such as a ROM (read only memory) 32, RAM (random access memory) 33, CPU (microprocessor) 34, input port 35, and output port 36.

The ROM 32 is a storage device for read only operations. The ROM 32 stores maps and other information necessary for control in advance. The CPU 34 can perform any processing or judgment. The RAM 33 is a storage device for random access operations. The RAM 33 can store operational history and other information or temporarily store processing results.

Downstream of the exhaust treatment device 13, a temperature sensor 27 for detecting the temperature of the exhaust treatment device 13 is arranged. Downstream of the particulate filter 16, a temperature sensor 26 for detecting the temperature of the particulate filter 16 is arranged. At the particulate filter 16, a differential pressure sensor 28 for detecting a differential pressure before and after the particulate filter 16 is attached. The output signals of these temperature sensors 26 and 27, differential pressure sensor 28, and intake air detector 8 are input through corresponding AD converters to the input port 35.

An accelerator pedal 40 is connected to a load sensor 41 which generates an output voltage which is proportional to an amount of depression of the accelerator pedal 40. The output signal of the load sensor 41 is input through a corresponding AD converter 37 to the input port 35. Further, the input port 35 has a crank angle sensor 42 connected to it which generates an output pulse every time a crank shaft rotates by for example 15°. From the output of the crank angle sensor 42, it is possible to detect the speed of the engine body 1.

On the other hand, the output port 36 is connected through corresponding drive circuits 38 to the fuel injectors 3, the step motor for driving the throttle valve 10, the EGR control valve 19, and the fuel pump 23. In this way, the fuel injectors 3 and the throttle valve 10 etc. are controlled by the electronic control unit 30.

The particulate filter 16 is a filter which removes fine carbon particles which are contained in exhaust gas, fine particles of sulfates and other ions, and other particulate matter. The particulate filter, for example, has a honeycomb structure and has a plurality of flow paths which extend in the direction of flow of the gas. In the plurality of flow paths, flow paths which have sealed bottom ends and flow paths which have sealed top ends are alternately formed. The partition walls of the flow paths are formed by porous materials such as cordierite. Particulate matter is trapped when exhaust gas passes through the partition walls. The particulate matter which gradually builds up at the particulate filter 16 is removed by being oxidized by raising the temperature up to for example 600°C in an excess air atmosphere for example.

The exhaust purification system of an internal combustion engine in the present embodiment is provide with not only the exhaust treatment device 13, but also the particulate filter 13, but the invention is not limited to this. It is also possible to arrange another exhaust treatment device in addition to the exhaust treatment device 13. For example, the exhaust purification system may also be provided with an NOₓ storage reducing catalyst (NSR) which purifies the exhaust gas of the NOₓ which is contained in it. The NOₓ storage reducing catalyst can, for example, be arranged between the exhaust treatment device 13 and the particulate filter 16.

The NOₓ storage reducing catalyst temporarily stores the NOₓ which is contained in the exhaust gas which is exhausted from the engine body and converts it to N₂ when releasing the stored NOₓ. The NOₓ storage reducing catalyst is comprised of a base member on which for example a catalyst carrier which includes aluminum oxide is carried. On the surface of the catalyst carrier, catalyst particles formed by a precious metal are carried dispersed. Further, on the surface of the catalyst carrier, a layer of an NOₓ adsorbent is formed. As the catalyst particles, for example, platinum Pt is used. As the constituents forming the NOₓ adsorbent, for example, barium Ba or other such alkali earth is used.

In the present invention, the ratio of the air and fuel (hydrocarbons) in the exhaust gas which is supplied to the engine intake passage, combustion chambers, or engine exhaust passage is referred to as the "air-fuel ratio of the exhaust gas (A/F)". When the air-fuel ratio of the exhaust gas is lean (when it is larger than the stoichiometric air-fuel ratio), the NO which is contained in the exhaust gas is oxidized and is stored in the NOx adsorbent. As opposed to this, when the air-fuel ratio of the exhaust gas is rich or becomes the stoichiometric air-fuel ratio, the NOₓ which is stored in the NOₓ adsorbent is released. The released NOₓ is reduced to N₂ by the unburned fuel or carbon monoxide etc. which is contained in the exhaust gas.

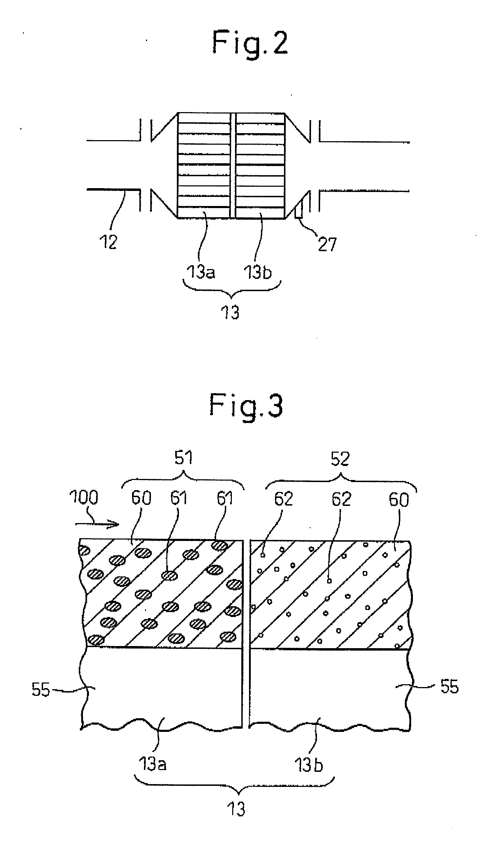

FIG. 2 is an enlarged schematic cross-sectional view of a first exhaust treatment device in the present embodiment. The first exhaust treatment device 13 in the present embodiment has a plurality of passages along the direction of flow of the exhaust gas. The first exhaust treatment device 13 is split in the middle of the direction of flow of the exhaust gas. The first exhaust treatment device 13 includes an upstream-side part 13a for adsorption of unburned fuel and a downstream-side part 13b for oxidation of the unburned fuel and carbon monoxide.

FIG. 3 is an enlarged schematic cross-sectional view of the first exhaust treatment device in the present embodiment. FIG. 3 is an enlarged schematic cross-sectional view of the part at the boundary of the upstream-side part 13a and the downstream-side part 13b. The upstream-side part 13a and the downstream-side part 13b are respectively provided with base members 55. The base members 55 in the present embodiment have pluralities of flow paths and are formed into honeycomb structures. The base members 55 are, for example, formed by cordierite or SiC or other monolithic base members.

At the surface of the base member 55 of the upstream-side part 13a, the adsorption part 51 is formed. The adsorption part 51 is formed at the plurality of flow paths of the base member 55. The adsorption part 51 is formed in a layer shape along the engine exhaust passage. The adsorption part 51 has the function of adsorbing unburned fuel. The adsorption part 51 in the first exhaust treatment device includes the carrier 60 and β (beta)- zeolite particles 61. The carrier 60 includes, for example, aluminum oxide (alumina: Al₂O₃) or other porous oxide powder. The carrier 60 and β-zeolite, particles 61 are, for example, supported at the base member 55 by a binder.

At the surface of the base member 55 of the downstream-side part 13b, an oxidation part 52 is formed. The oxidation part 52 is formed at the plurality of flow paths of the base member 55. The oxidation part 52 is formed in a layer shape along the engine exhaust passage. The oxidation part 52 has the function of oxidizing the unburned fuel and carbon monoxide etc. The oxidation part' 52 of the first exhaust treatment device 13 includes the carrier 60 and catalyst particles 62. The carrier 60 is fastened to the base member 55 by a binder. The catalyst particles 62 are carried at the carrier 60. The catalyst particles 62 are metal particles for oxidizing the substances to be oxidized contained in the exhaust gas. The catalyst particles 62 in the present embodiment are formed from precious metals. As the catalyst particles 62, platinum group metals (PGM) may be used. The catalyst particles 62 can, for example, use at least one precious metal among platinum Pt, palladium Pd, and rhodium Rh.

In the first exhaust treatment device of the present embodiment, the adsorption part 51 is arranged at the upstream side base member 55, while the oxidation part 52 is arranged at the downstream side base member 55. The first exhaust treatment device 13 is formed by an upstream-side part and a downstream-side part by the base member 55 being split, but the invention is not limited to this. The base member may also be integrally formed. That is, the absorption part may be formed on a single surface of the base member at the upstream side along the direction of flow of the exhaust gas, while the oxidation part may be formed at the downstream side.

The unburned fuel (HC) which is contained in exhaust gas includes chain hydrocarbons which have double bond, that is, olefins, chain hydrocarbons which do not have unsaturated bond, that is, paraffins, and aromatic hydrocarbons which have benzene nuclei, that is, aromatics. Exhaust gas contains higher hydrocarbons with large numbers of carbon atoms. Higher hydrocarbons include higher olefins, higher paraffins, aromatics, etc. Olefins include lower olefins and higher olefins with greater numbers of carbon atoms than lower olefins. Lower olefins, for example, are hydrocarbons with five or less number of carbon atoms. Preferably, the lower olefins include hydrocarbons with two or three carbon atoms, that is, ethylene and propylene.

The exhaust treatment device 13 which oxidizes the substances to be oxidized in the present embodiment adsorbs the unburned fuel at the adsorption part 51 when the exhaust gas is low in temperature. For example, unburned fuel is adsorbed when the temperature of the exhaust treatment device 13 is less than the release temperature of the unburned fuel. If the temperature of the exhaust gas rises, unburned fuel is released from the adsorption part 51. For example, if the temperature of the exhaust treatment device 13 becomes the release temperature of the unburned fuel or more, unburned fuel is released. The released unburned fuel is purified from the exhaust by being oxidized at the oxidation part 52. The carbon monoxide which flows into the exhaust treatment device is oxidized at the oxidation part 52. By having the carbon monoxide or unburned hydrocarbons which are contained in exhaust gas be oxidized, it is converted to water and carbon dioxide.

Referring to FIG. 3, when the exhaust gas flows into the exhaust treatment device 13, it contacts the adsorption part 51. When the exhaust gas is a low temperature, the unburned fuel which is contained in the exhaust gas is adsorbed at the adsorption part 51. At least part of the unburned fuel can be removed from the exhaust gas. Next, the exhaust gas contacts the oxidation part 52. At the oxidation part 52, the carbon monoxide can be oxidized.

In this regard, in the oxidation catalyst, sometimes the unburned fuel contained in exhaust gas obstructs the oxidation of carbon monoxide. For example, the unburned fuel is adsorbed at the surface of the catalyst particles and poisons the catalyst. As a result, sometimes oxidation of carbon monoxide was obstructed.

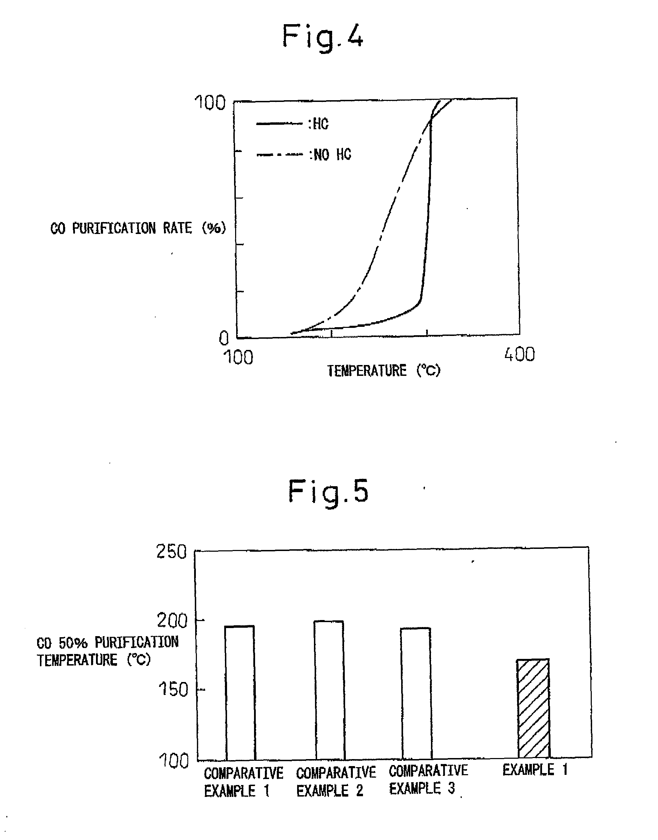

FIG. 4 shows a graph of the relationship between the temperature of the oxidation catalyst and the purification rate of carbon monoxide. In the test shown in FIG. 4, an oxidation catalyst which includes a ceria-zirconia solid solution and catalyst particles of platinum is used. Further, the air-fuel ratio of the exhaust gas which flows into the oxidation catalyst is made lean. The test was run for the case where the exhaust gas includes unburned fuel HC and the case where unburned fuel HC is not included. The abscissa indicates the temperature of the oxidation catalyst, while the ordinate indicates the purification rate of carbon monoxide.

It is learned that more the temperature of the oxidation catalyst rises, the more the purification rate of carbon monoxide is improved. when comparing the case where unburned fuel is included and the case where it is not included, it is learned that at the substantially entire temperature region, the purification rate of carbon monoxide is higher in the case where no unburned fuel is included than the case where unburned fuel is included. Alternatively, it is learned that the temperature of the oxidation catalyst which is required for obtaining the same purification rate of carbon monoxide is lower when unburned fuel is not included than when unburned fuel is included. From the test results, it is learned that by removing at least part of the unburned fuel before the exhaust gas contacts the oxidation part, the purification rate of carbon monoxide is improved.

In the first exhaust treatment device in the present embodiment, the adsorption part 51 is arranged at the upstream side, while the oxidation part 52 is arranged at the downstream side. The adsorption part 51 and the oxidation part 52 are arranged so that the exhaust gas contacts the adsorption part 51, then contacts the oxidation part 52. The exhaust gas which flows into the adsorption part 51 has at least part of the unburned fuel removed. For this reason, it is possible to reduce the concentration of unburned fuel which flows into the oxidation part 52. The oxidation part 52 can effectively cause oxidation of the carbon monoxide. In particular, when the exhaust treatment device 13 is a low temperature, it is possible to keep unburned fuel from building up at and poisoning the oxidation part 52.

In the exhaust gas which is exhausted from the combustion chambers 2, higher paraffins with a large number of carbon atoms remain. The olefins include large amounts of higher olefins with large numbers of carbon atoms and lower olefins with small numbers of carbon atoms.

The lower olefins in the unburned fuel which is contained in the exhaust gas have the property of a strong effect in obstructing oxidation of carbon monoxide. The adsorption part of the exhaust treatment device in the present embodiment includes zeolite which substantially adsorbs the lower olefins. That is, the adsorption part includes zeolite which adsorbs lower olefins by a predetermined efficiency or more so that the oxidation of carbon monoxide is not substantially obstructed at the oxidation part. The adsorption part of the first exhaust treatment devices includes β-zeolite. The exhaust treatment device in the present embodiment can effectively remove lower olefins from the exhaust gas at the adsorption part. As a result, it is possible to purify the exhaust of carbon monoxide by a high purification rate at the oxidation part.

As the zeolite which substantially adsorbs the lower olefins, in addition to β-zeolite, zeolite in which a metal is carried by ion exchange can be used. In particular, ZMS5 which has exchanged ions with iron and ZMS5 which has exchanged ions with silver are superior in efficiency of adsorption of lower olefins. For this reason, the adsorption part preferably includes at least one of ZMS5 which has exchanged ions with iron and ZMS5 which has exchanged ions with silver.

FIG. 5 shows a graph of the 50% purification temperature of carbon monoxide of Example 1 and comparative examples of the present embodiment. The ordinate indicates the temperature at which the purification rate of carbon monoxide contained in the exhaust gas becomes 50%. In the examples and comparative examples described below, the volumes or weights of the corresponding parts are made the same. The exhaust treatment devices are formed so that the total volume of the base member becomes the same (1L), the weight of the coated layer which is formed on the surface of the base member is formed to become the same (150 g), and the weight of the catalyst particles is formed to become the same (1.8 g).

Example 1 corresponds to the first exhaust treatment device in the present embodiment. Referring to FIG. 3, in Example 1, as the base member 55 of the upstream-side part 13a and the base member 55 of the downstream-side part 13b, a cordierite base member (0.5L) is used. The adsorption part 51 is provided with a coated layer including β-zeolite particles 61 (60 g) and the carrier 60 of aluminum oxide (15 g). The oxidation part 52 is provided with a coated layer including the carrier 60 of aluminum oxide (75 g). The catalyst particles 62 include platinum. (1.2 g) and palladium (0.6 g). The catalyst particles 62 of Example 1 are formed so that the amount of platinum becomes greater than the amount of palladium.

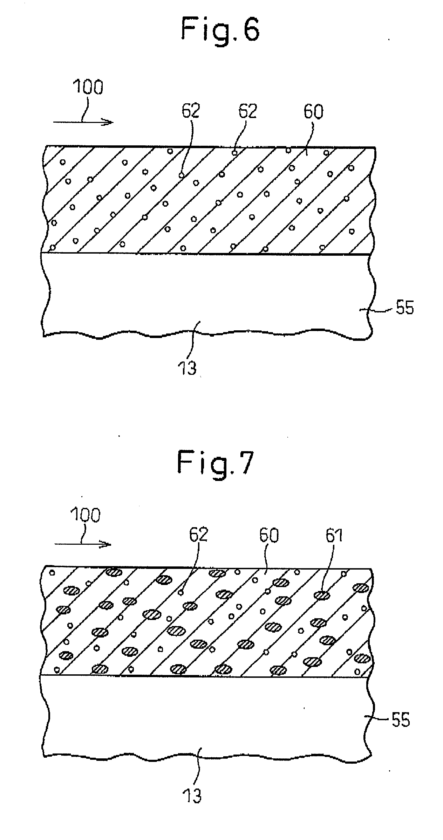

FIG. 6 is an enlarged schematic cross-sectional view of an exhaust treatment device of Comparative Example 1 in the present embodiment. In the exhaust treatment device of Comparative Example 1, the carrier 60 is arranged at the surface of the base member 55. The carrier 60 carries catalyst particles 62 of a precious metal. The base member 55 of comparative Example 1 is formed integrally without being split. In Comparative Example 1, a cordierite base member (1L) is used as the base member 55. At the surface of the base member 55, a coated layer including the carrier 60 of aluminum oxide (150 g) is formed. The carrier 60 carries catalyst particles 62 which are formed from platinum (1.2 g) and palladium (0.6 g).

FIG. 7 is an enlarged schematic cross-sectional view of an exhaust treatment device of Comparative Example 2 in the present embodiment. In the exhaust treatment device of Comparative Example 2, at the surface of the base member 55, a coated layer including the carrier 60 formed by aluminum oxide and β-zeolite particles 61 is formed. At the layers of the carrier 60 and β-zeolite particles 61, catalyst particles 62 are arranged. In Comparative Example 2, as the base member 55, a cordierite base member (1L) is used. The carrier 60 of aluminum oxide (90 g) and β-zeolite particles 61 (60 g) are used to form the coated layer. As the catalyst particles 62, platinum (1.2 g) and palladium (0.6 g) are arranged.

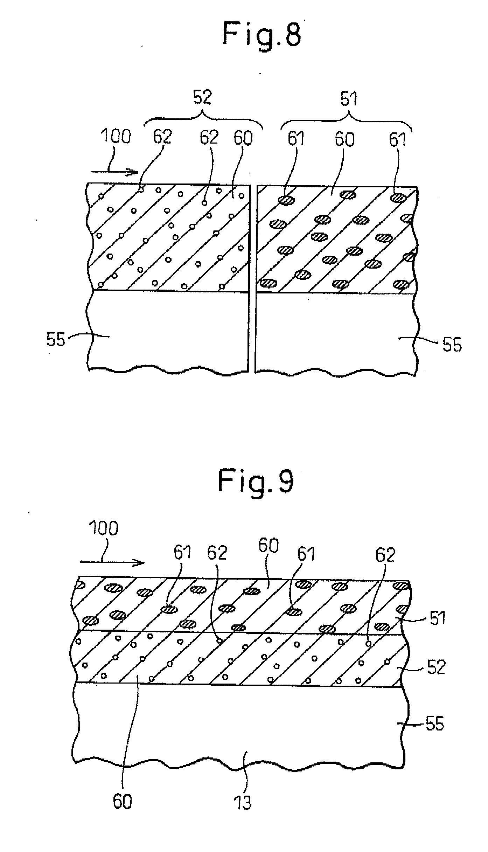

FIG. 8 is an enlarged schematic cross-sectional view of an exhaust treatment device of Comparative Example 3 in the present embodiment. In Comparative Example 3, the base member 55 is split. The exhaust treatment device includes the adsorption part 51 and the oxidation part 52. The respective adsorption part 51 and oxidation part 52 are similar to those in the first exhaust treatment device in the present embodiment. In Comparative Example 3, the oxidation part 52 is arranged at the upstream side in the direction of flow of the exhaust gas, while the adsorption part 51 is arranged at the downstream side. In Comparative Example 3, compared with Example 1, the oxidation part and the adsorption part are reversed in order.

In Comparative Example 3, as the base member 55 of the adsorption part 51 and the base member 55 of the oxidation part 52, a cordierite base member (0.5 L) was used. At the oxidation part 52, a coated layer of the carrier 60 of aluminum oxide (75 g) is formed. The carrier 60 carries catalyst particles 62 which are formed from platinum (1.2 g) and palladium (0.6 g). In the adsorption part 51, a coated layer of the carrier 60 of aluminum oxide (15 g) and β-zeolite particles 61 (60 g) is formed..

Referring to FIG. 5, internal combustion engines provided with the exhaust treatment device of Example 1 and the exhaust treatment devices of Comparative Example 1 to Comparative Example 3 were tested. In the tests, an engine bench test apparatus was used. In the tests shown in FIG. 5, the tests were run in the steady state with a constant output torque.

It is learned that the exhaust treatment device of Example 1 has the lowest 50% purification temperature of carbon monoxide compared with the exhaust treatment devices of Comparative Example 1 to Comparative Example 3. That is, it is learned that when the exhaust gas is a low temperature, an excellent ability to purify the exhaust of carbon monoxide can be exhibited. Further, it is learned that the exhaust treatment device of Example 1 is superior in the ability to purify the exhaust of carbon monoxide compared with the exhaust treatment devices of Comparative Example 1 to Comparative Example 3.

Comparative Example 1 which is shown in FIG. 6 is an exhaust treatment device comprised of a coated layer formed by aluminum oxide in which catalyst particles 62 are arranged. Comparative Example 2 which is shown in FIG. 7 further has β-zeolite particles 61 contained in the coated layer. Comparing Comparative Example 2 and Example 1, it is learned that even when β-zeolite particles 61 are arranged at the coated layer, by separating the layer which contains the catalyst particles 62 and the layer which contains the β-zeolite particles 61, the ability to purify the exhaust of carbon monoxide is improved. In particular, by comparing Comparative Example 3 which is shown in FIG. 8 and Example 1 which is shown in FIG. 3, it is learned that by arranging the oxidation part 52 at the downstream side from the adsorption part 51, the ability to purify the exhaust of carbon monoxide is improved.

In this way, in the first exhaust treatment device. of the present embodiment, by arranging β-zeolite at the adsorption part 51 and arranging the oxidation part 52 at the downstream side of the adsorption part 51, it is possible to obtain a superior ability to purify exhaust of carbon monoxide. Alternatively, it is possible to obtain a superior ability to purify exhaust of carbon monoxide from a low temperature region of the exhaust treatment device. For example, in the period of a warmup operation of internal combustion engine after startup, it is possible to efficiently purify the exhaust of carbon monoxide. Alternatively, even when the oxidation part is less than the activation temperature, the exhaust can be efficiently purified of carbon monoxide. Alternatively, it is possible to efficiently purify the exhaust of carbon monoxide in an internal combustion engine with a low temperature of the exhaust gas which flows into the exhaust treatment device.

The exhaust purification system in the present embodiment can make the temperature of the oxidation part quickly rise so as to enable efficient oxidation of the carbon monoxide. For example, even during the warmup period of the internal combustion engine, it is possible to make the temperature of the oxidation part rise to the activation temperature in a short time. As a result, it is possible to purify the exhaust of unburned fuel quickly by a high efficiency. Further, when the exhaust treatment device to be raised quickly in temperature is arranged downstream of the oxidation part, it is possible to raise the temperature in a short time. For example, when an NOₓ storage reducing catalyst is arranged downstream of the oxidation part, it is possible to make the NOₓ storage reducing catalyst rise to the activation temperature or more in a short time.

FIG. 9 is an enlarged schematic cross-sectional view of a second exhaust treatment device in the present embodiment. The second exhaust treatment device 13 is provided with the base member 55 which is formed by cordierite etc. The base member 55 of the second exhaust treatment device is formed integrally without being split in the middle of the direction of flow of the exhaust gas.

The second exhaust treatment device 13 is provided with the adsorption part 51 and the oxidation part 52. The adsorption part 51 and the oxidation part 52 are respectively formed in layer shapes whereby a coated layer is formed. The adsorption part 51 and the oxidation part 52 are stacked on the surface of the base member 55. The oxidation part 52 is arranged at the side farther from the engine exhaust passage than the adsorption part 51. In the example which is shown in FIG. 9, the oxidation part 52 is arranged at the surface of the base member 55, while the adsorption part 51 is arranged at the surface of the oxidation part 52. The adsorption part 51 includes the carrier 60 and β-zeolite particles 61. The oxidation part 52 includes the carrier 60 and catalyst particles 62.

By forming the adsorption part 51 and the oxidation part 52 in layer shapes and stacking them so that the absorption part 51 becomes closer to the engine exhaust passage than the oxidation part 52, it is possible to make the exhaust gas contact the adsorption part 51, then contact the oxidation part 52. It is possible to remove at least part of the unburned fuel which is contained in the exhaust gas at the adsorption part 51. Exhaust gas reduced in unburned fuel flows into the oxidation part 52. For this reason, at the oxidation part 52, it is possible to oxidize the carbon monoxide efficiently. Further, by having the adsorption part include zeolite which substantially adsorbs the lower olefins, it is possible to oxidize the carbon monoxide efficiently.

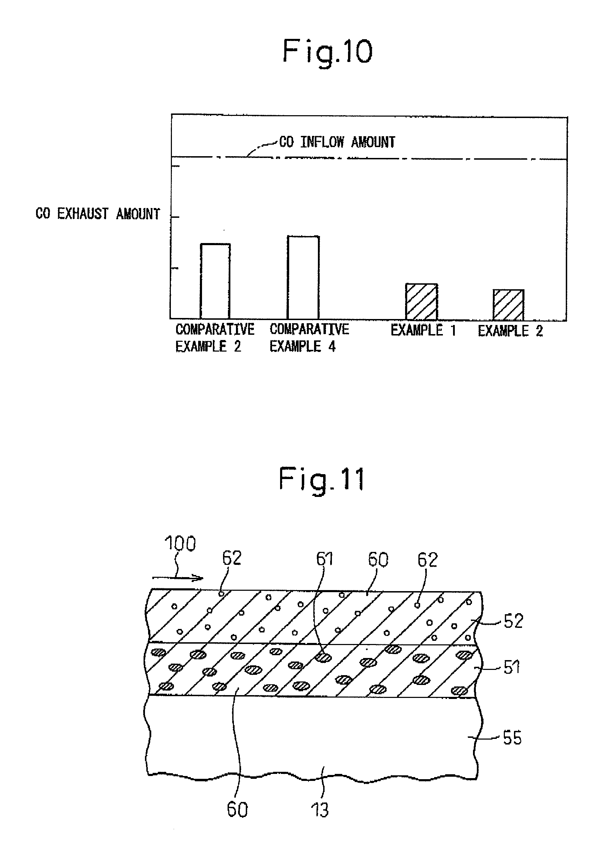

FIG. 10 shows a graph of the amount of exhaust of carbon monoxide of Example 2 and comparative examples in the present embodiment. FIG. 10 shows the results of a transient test simulating actual operating conditions in an engine bench test apparatus. That is, the test was run while changing the running mode and output torque etc. FIG. 10 shows the amount of carbon monoxide which flows into the exhaust treatment device and the amount of carbon monoxide which is exhausted from the exhaust treatment device. Example 2 corresponds to the second exhaust treatment device. Further, FIG. 10 describes the test results of Example 1 which corresponds to the first exhaust treatment device and the test results of Comparative Example 2 shown in FIG. 7.

Referring to FIG. 9, in Example 2, a cordierite base member (1L) is used as the base member 55. The oxidation part 52 includes the carrier 60 of aluminum oxide (75 g). The carrier 60 carries platinum (1.2 g) and palladium (0.6 g) as the catalyst particles 62. On the surface of the oxidation part 52, the carrier 60 of aluminum oxide (15 g) and β-zeolite particles 61 (60 g) are arranged to form the adsorption part 51.

FIG. 11 is a schematic cross-sectional view of an exhaust treatment device of Comparative Example 4 in the present embodiment. In Comparative Example 4, the absorption part 51 is arranged at the surface of the base member 55. The oxidation part 52 is arranged at the surface of the adsorption part 51. That is, compared with the second exhaust treatment device, the adsorption part 51 and the oxidation part 52 are reversed in position. The exhaust gas contacts the oxidation part 52, then contacts the adsorption part 51.

In Comparative Example 4, a cordierite base member (1L) is used as the base member 55. On the surface of the base member 55, the carrier 60 of aluminum oxide (15 g) and β-zeolite particles 61 (60 g) are used to form an adsorption part 51. On the surface of the adsorption part 51, the carrier 60 of aluminum oxide (75 g) is arranged to form the oxidation part 52. The carrier 60 carries catalyst particles 62 which are formed from platinum (1.2 g) and palladium (0.6 g) .

Referring to FIG. 10, it is learned that in Example 2 corresponding to the second exhaust treatment device as well, the amount of exhaust of carbon monoxide is smaller compared with the exhaust treatment device of Comparative Example 2 where catalyst particles 62 are arranged at a coated layer of a mixture of the carrier 60 and β-zeolite particles 61. (see FIG. 7).

Further, it is learned that the exhaust treatment device of Example 2, compared with the exhaust treatment device of Comparative Example 4 which arranges the oxidation part 52 at the side near the engine exhaust passage (see FIG. 11), is superior in ability to purify exhaust of carbon monoxide. That is, it is learned that an exhaust treatment device in which the oxidation part is arranged at the side farther from the engine exhaust passage compared with the adsorption part is superior. In this way, even in the second exhaust treatment device, by arranging the oxidation part and the adsorption part so that the exhaust gas contacts the adsorption part, then contacts the oxidation part, it is possible to efficiently purify exhaust of carbon monoxide.

Further, it is learned that the exhaust treatment device of Example 2 is superior to the exhaust treatment device of Example 1. That is, by stacking the oxidation part and the adsorption part on the surface of the base member in this order, it is possible to efficiently purify exhaust of carbon monoxide.

In this regard, the adsorption part which is contained in the exhaust treatment device preferably includes zeolite for adsorbing the unburned fuel HC. Next, the type of zeolite was changed and the purification ability of carbon monoxide was tested. As the exhaust treatment device, the second exhaust treatment device in the present embodiment was used (see FIG. 9) for the tests.

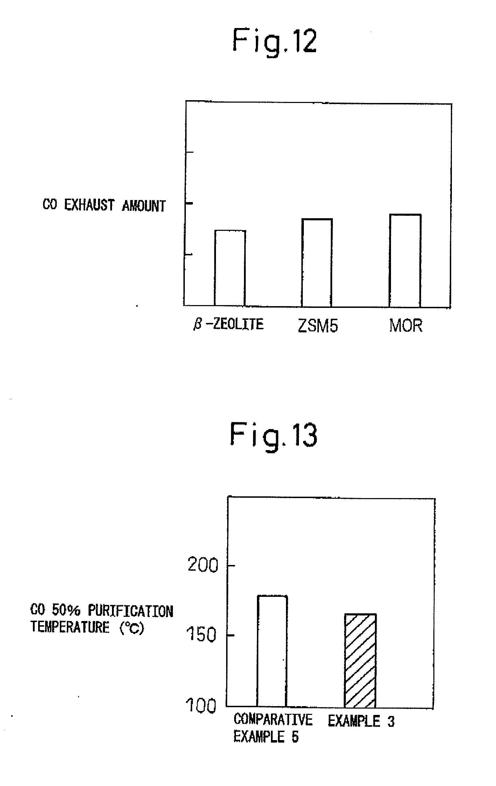

FIG. 12 is a graph showing the relationship between the type of zeolite which is contained in the adsorption part and the amount of exhaust of carbon monoxide. As the zeolite, in addition to β-zeolite, ZSM5 and mordenite (MOR) were used for the tests. By using β-zeolite in the zeolite, it is learned that the amount of exhaust of carbon monoxide becomes smaller. That is, by using β-zeolite as the zeolite which is contained in the adsorption part, it is possible to efficiently adsorb the unburned fuel and to reduce the exhaust of carbon monoxide more.

Next, a third exhaust treatment device in the present embodiment will be explained. In the above exhaust treatment devices, the catalyst particles contained in the oxidation part included platinum and palladium, the invention is not limited to this. The catalyst particles may include any metal which has an oxidation ability.

The third exhaust treatment device in the present embodiment has substantially all of the catalyst particles formed from platinum. As shown in FIG. 4, the exhaust treatment device in the present embodiment can efficiently purify the exhaust of carbon monoxide even if substantially all of the catalyst particles are formed from platinum.

FIG. 13 shows a graph of the 50% purification temperature of carbon monoxide for Example 3 and a comparative example in the present embodiment. Example 3 corresponds to the third exhaust treatment device. The exhaust treatment device of Example 3 is configured in the same way as the second exhaust treatment device in the present embodiment (see FIG. 9). In the exhaust treatment device of Example 3, substantially all of the catalyst particles 62 are formed from platinum.

In Example 3, the oxidation part 52 is formed by arranging the carrier 60 of aluminum oxide (75 g) on the surface of the cordierite base member (1L) used as the base member 55. The carrier 60 carries platinum (1.8 g) catalyst particles 62. On the surface of the oxidation part 52, the adsorption part 51 including the carrier 60 (15 g) of aluminum oxide and β-zeolite (60 g) is formed.

Further, as the exhaust treatment device of Comparative Example 5, a similar constitution as the exhaust treatment device of Comparative Example 1 is employed (see FIG. 6). The carrier 60 of aluminum oxide (150 g) is arranged on the surface of the cordierite base member (1L) used as the base member 55. The carrier 60 carries platinum (1.8 g) catalyst particles 62.

Referring to FIG. 13, even when forming substantially all of the catalyst particles which are arranged at the oxidation part from platinum, compared with the exhaust treatment device of Comparative Example 5, the exhaust treatment device of Example 3 has a lower 50% purification temperature of carbon monoxide. That is, it is learned that compared with the exhaust treatment device of Comparative Example 5, the exhaust treatment device of Example 3 is superior in ability to purify exhaust of carbon monoxide. In particular, it is learned that the exhaust treatment device of Example 3 is superior in ability to purify exhaust of carbon monoxide even at a low temperature region.

In this way, the exhaust treatment device in the present embodiment can employ catalyst particles which are formed substantially entirely from platinum. Alternatively, it is possible to employ a precious metal comprised mainly of platinum as the catalyst particles. For example, when including platinum, palladium, rhodium, etc. as the catalyst particles of the precious metal, it is possible to increase the amount of platinum over the total amount of palladium, rhodium, etc. other than the platinum. Alternatively, for example, it is possible to make the total amount of palladium, rhodium, etc. other than the platinum not more than one-half of the amount of platinum.

Furthermore, the internal combustion engine of the present embodiment controls the air-fuel ratio at the time of combustion to be lean at the time of ordinary operation. The air-fuel ratio of the exhaust gas which is exhausted from the combustion chambers is lean. The exhaust gas contains excess oxygen. The oxidation part in the present embodiment is not provided with an oxygen storing substance. The catalyst particles of metal of the oxidation part are comprised of metal particles other than metal particles which have an oxygen storage ability.

The exhaust treatment device is not limited to one which does not contain an oxygen storing substance. It may also contain an oxygen storing substance. As the oxygen storing substance, ceria CeO₂ or another cocatalyst which has the ability to store oxygen may be illustrated. For example, the oxygen storing substance contains a composite of oxides of cerium and zirconium. The oxygen storing substance sometimes can suppress deterioration of other catalyst particles. In such a case, the exhaust treatment device may also contain an oxygen storing substance.

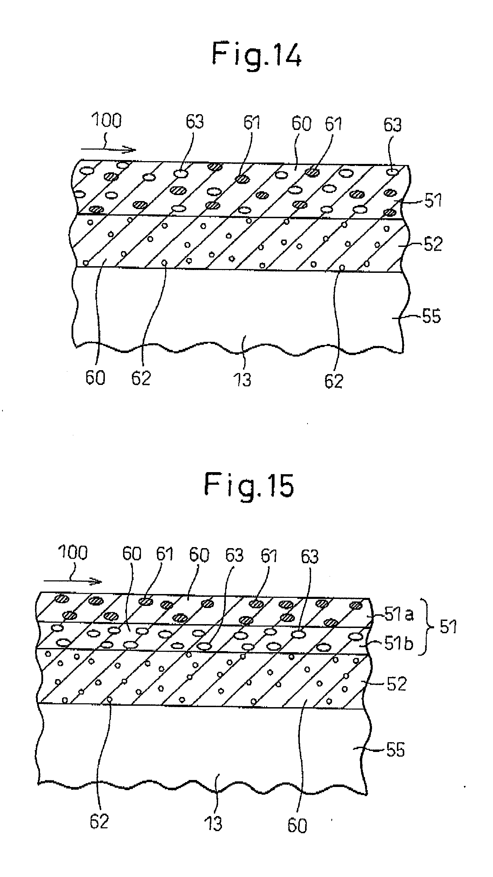

FIG. 14 shows a fourth exhaust treatment device in the present embodiment. In the fourth exhaust treatment device, the oxidation part 52 and the adsorption part 51 are stacked on the surface of the base member 55. The oxidation part 52 includes the carrier 60 on which the catalyst particles 62 are tarried. The adsorption part 51 in the fourth exhaust treatment device includes zeolite particles exchanging ions with metal in addition to the carrier 60 and the β-zeolite particles 61. As the zeolite particles 63 exchanging ions with metal, zeolite particles which have exchanged ions with iron or silver may be illustrated. At the adsorption part 51, the carrier 60, β-zeolite particles 61, and zeolite particles 63 exchanging ions with a metal are arranged substantially uniformly.

Lower olefins have a strong effect in obstructing the oxidation of carbon monoxide. For example, propylene etc. have a strong effect obstructing the oxidation reaction of carbon monoxide. On the other hand, zeolite exchanging ions with a metal has the property of a high efficiency of adsorption of lower olefins. By arranging zeolite particles 63 exchanging ions with a metal at the adsorption part 51, it is possible to further efficiency adsorb the lower olefins. For this reason, it is possible to raise the efficiency of purification of exhaust of carbon monoxide at the oxidation part 52. In this way, it is possible to mix in zeolite with a high ability to adsorb lower olefins so as to form the adsorption part.

FIG. 15 is a schematic cross-sectional view of a fifth exhaust treatment device in the present embodiment. The fifth exhaust treatment device is comprised of the base member 55 on the surface of which the oxidation part 52 is arranged. The oxidation part 52 includes the carrier 60 on which the catalyst particles 62 are carried. At the surface of the oxidation part 52, the adsorption part 51 is formed.

The adsorption part 51 at the fifth exhaust treatment device has a plurality of parts. The adsorption part 51 includes a higher hydrocarbon adsorption part 51a which adsorbs higher hydrocarbons and a lower olefin adsorption part 51b which adsorbs lower olefins. The lower olefin adsorption part 51b is arranged at the surface of the oxidation part 52. The higher hydrocarbon adsorption part 51a is arranged at the surface of the lower olefin adsorption part 51b.

The fifth exhaust treatment device is formed so that the exhaust gas contacts the higher hydrocarbon adsorption part 51a, then contacts the lower olefin adsorption part 51b. The higher hydrocarbon adsorption part 51a includes the carrier 60 of aluminum oxide and β-zeolite particles 61. The lower olefin adsorption part 51b includes the carrier 60 of aluminum oxide and the zeolite particles 63 exchanging ions with a metal.

As explained above, zeolite which has exchanged ions with a metal is superior in efficiency of adsorption of lower olefins. However, if higher hydrocarbons contact zeolite which has exchanged ions with a metal, the higher hydrocarbons will be adsorbed. At this time, the adsorption sites for adsorption of lower olefins will end up being blocked. For example, the acid centers for adsorption of propylene or ethylene etc. will end up being blocked. As a result, the efficiency of adsorption of lower olefins will deteriorate.

In the fifth exhaust treatment device, the higher hydrocarbon adsorption part 51a can remove in advance the higher hydrocarbons with large molecular weights. After that, the lower olefin adsorption part 51b can remove the lower olefins. For this reason, it is possible to efficiently adsorb the lower olefins at the lower olefin adsorption part 51b. It is possible to reduce the amount of lower olefins which reach the oxidation part 52. As a result, the purification ability of carbon monoxide can be improved.

The higher hydrocarbon adsorption part preferably includes zeolite which can efficiently adsorb higher hydrocarbons. For example, the higher hydrocarbon adsorption part preferably includes β-zeolite. The lower olefin adsorption part preferably includes zeolite able to efficiently adsorb lower olefins. The lower olefin adsorption part preferably includes zeolite on which a metal is carried by ion exchange. For example, it is preferable to include at least one of ZSM5 which has exchanged ions with iron and ZSM5 which has exchanged ions with silver.

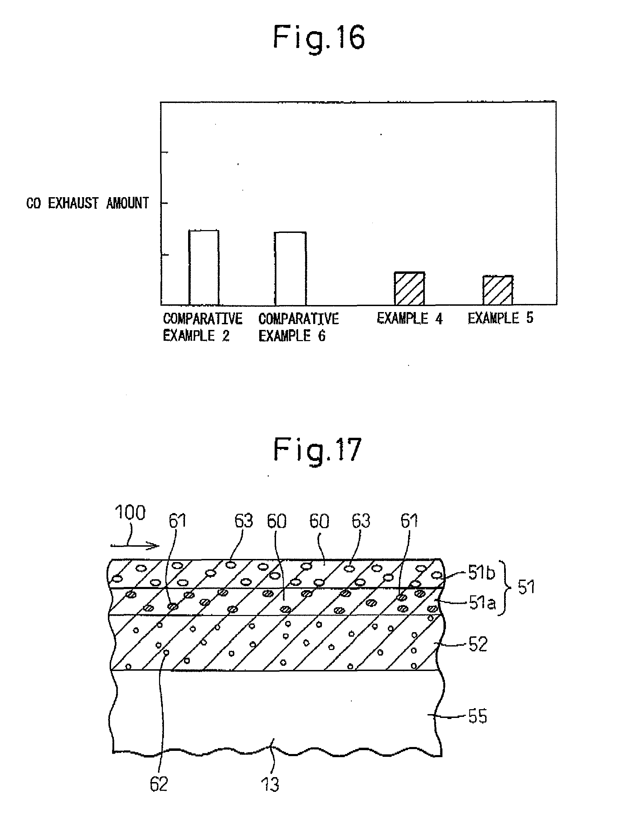

FIG. 16 shows a graph of the amount of exhaust of carbon monoxide of Example 4 and Example 5 and comparative examples in the present embodiment. Example 4 corresponds to the fourth exhaust treatment device in the present embodiment. Example 5 corresponds to the fifth exhaust treatment device in the present embodiment. FIG. 16 shows the results of a transient test in an engine bench test apparatus.

Referring to FIG. 14, in the exhaust treatment device of Example 4, a cordierite base member (1L) is used as the base member 55. The oxidation part 52 includes the carrier 60 of aluminum oxide (75 g). The carrier 60 carries catalyst particles 62 which contain platinum (1.2 g) and palladium (0.6 g). The adsorption part 51 contains the carrier 60 of aluminum oxide (15 g), particles of ZSM5 which have exchanged ions with iron (4 wt%) (30 g) as the zeolite particles 63 which have exchanged ions with a metal, and β-zeolite particles 61 (30 g).

Referring to FIG. 15, in the exhaust treatment device of Example 5, a cordierite base member (1L) is used as the base member 55. The oxidation part 52 includes the carrier 60 of aluminum oxide (75 g) and catalyst particles 62 which are formed from platinum (1.2 g) and palladium (0.6 g). At the surface of the oxidation part 52, the lower olefin adsorption part 51b and higher hydrocarbon adsorption part 51a are arranged. The lower olefin adsorption part 51b includes the carrier 60 of aluminum oxide (7.5 g) and particles of ZSM5 which have exchanged ions with iron (4 wt%) (30 g) as the zeolite particles 63 which have exchanged ions with a metal. The higher hydrocarbon adsorption part 51a includes the carrier 60 of aluminum oxide (7.5 g) and β-zeolite particles 61(30 g).

FIG. 17 is a schematic cross-sectional view of an exhaust treatment device of Comparative Example 6 in the present embodiment. In Comparative Example 6, the adsorption part 51 is arranged on the surface of the oxidation part 52. The adsorption part 51 includes the higher hydrocarbon adsorption part 51a and the lower olefin adsorption part 51b. The higher hydrocarbon adsorption part 51a includes the carrier 60 of aluminum oxide and β-zeolite particles 61. The lower olefin adsorption part 51b includes the carrier 60 of aluminum oxide and particles of ZSM5 which have exchanged ions with iron as the zeolite particles 63 which have exchanged ions with a metal.

The exhaust treatment device of Comparative Example 6, compared with the exhaust treatment device of Example 5, has the higher hydrocarbon adsorption part 51a and the lower olefin adsorption part 51b stacked in the reverse order. In Comparative Example 6, the lower olefin adsorption part 51b is arranged at the surface side contiguous with the engine exhaust passage, while the higher hydrocarbon adsorption part 51a is arranged at a layer below that.

In Comparative Example 6, a cordierite base member (1L) is used as the base member 55. The oxidation part 52 includes catalyst particles which were formed from the carrier 60 of aluminum oxide (75 g) and platinum (1.2 g) and palladium (0.6 g). At the surface of the oxidation part 52, the higher hydrocarbon adsorption part 51a and lower olefin adsorption part 51b are arranged. The higher hydrocarbon adsorption part 51a includes the carrier 60 of aluminum oxide (7.5 g) and β-zeolite particles 61 (30 g). The lower olefin adsorption part 51b includes the carrier 60 of aluminum oxide (7.5 g) and particles of ZSM5 (30 g) which have exchanged ions with iron (4 wt%) as zeolite particles 63 which have exchanged ions with a metal.

Referring to FIG. 16, the exhaust treatment device of Example 4 and the exhaust treatment device Example 5 have smaller amounts of exhaust of carbon monoxide compared with the exhaust treatment device of Comparative Example 2 (see FIG. 7) where the carrier 60 and β-zeolite particles 61 are uniformly arranged.

Furthermore, compared with the exhaust treatment device of Example 4, the exhaust treatment device of Example 5 has a smaller amount of exhaust of carbon monoxide. By forming the higher hydrocarbon adsorption part and lower olefin adsorption part at the adsorption part, it is possible to more efficiently purify the exhaust of carbon monoxide,

Further, when comparing the exhaust treatment device of Comparative Example 6 and the exhaust treatment device of Example 5, the exhaust treatment device of Example 5 has a smaller amount of exhaust of carbon monoxide. When the adsorption part includes a higher hydrocarbon adsorption part and lower olefin adsorption part, preferable the higher hydrocarbon adsorption part is arranged at the side near to the engine exhaust passage. By arranging the higher hydrocarbon adsorption part and lower olefin adsorption part in this way so that at the adsorption part, the exhaust gas contacts the higher hydrocarbon adsorption part, then contacts the lower olefin adsorption part, it is possible to more efficiently reduce the amount of exhaust of carbon monoxide.

In the above third exhaust treatment device to fifth exhaust treatment device, the explanation was given with reference to the example of an exhaust treatment device comprised of an adsorption part and an oxidation part stacked on the surface of a base member, the invention is not limited to this. It is also possible to apply this to an exhaust treatment device which arranges the adsorption part and the oxidation part along the direction of flow of the exhaust gas like in the first exhaust treatment device. For example, in the first exhaust treatment device, the catalyst particles 62 of the oxidation part 52 can be formed from a precious metal such as mainly platinum. Further, in the first exhaust treatment device, it is possible to mix in zeolite which has exchanged ions with a metal in the adsorption part 51.

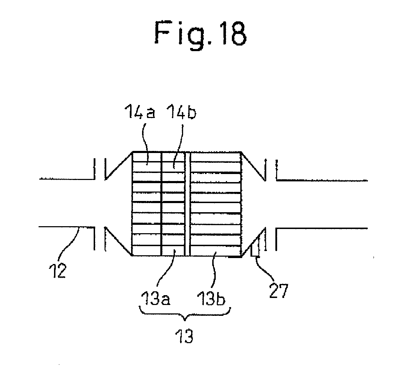

FIG. 18 is a schematic cross-sectional view of a sixth exhaust treatment device in the present embodiment. The sixth exhaust treatment device 13 employs the higher hydrocarbon adsorption part and the lower olefin adsorption part of the adsorption part in the fifth exhaust treatment device. The adsorption part and the oxidation part are arranged along the direction of flow of the exhaust gas. In the adsorption part, the higher hydrocarbon adsorption part is arranged at the upstream side, while the lower olefin adsorption part is arranged at the downstream side. The exhaust treatment device 13 is provided with an upstream-side part 13a which includes the adsorption part and a downstream-side part 13b which includes the oxidation part. The upstream-side part 13a includes a first part 14a which has the higher hydrocarbon adsorption part and a second part 14b which has the lower olefin adsorption part. The exhaust gas contacts the higher hydrocarbon adsorption part, then contacts the lower olefin adsorption part. The exhaust gas then flows into the oxidation part. Due to this configuration as well, the purification efficiency of carbon monoxide can be improved.

In the exhaust treatment device of the present embodiment, the zeolite which is contained in the adsorption part preferably has many acid centers, so the molar ratio of SiO₂/Al₂O₃ is preferably small. On the other hand, in the engine exhaust passage, the temperature of the exhaust gas sometimes reaches a high temperature of for example over 700°C. The exhaust treatment device requires heat resistance against such a high temperature. Further, exhaust gas contains water vapor which is produced by the combustion. The device is liable to be unable to withstand the usage environment and to end up breaking. Considering the durability of the exhaust treatment device, the molar ratio of the SiO₂/Al₂O₃ is for example 20 or more.

In the present embodiments, an exhaust treatment device in which the adsorption part and the oxidation part are adjacent is illustrated, but the invention is not limited to this. The adsorption part and the oxidation part may also be separated from each other. Further, another member may be arranged between the adsorption part and the oxidation part. For example, in the engine exhaust passage, it is also possible to arrange an exhaust treatment device which includes an oxidation part downstream of an exhaust treatment device which includes an adsorption part.

In the present embodiments, catalyst particles which have an oxidation function are not arranged at the adsorption part, but the invention is not limited to this. Catalyst particles which have an oxidation function may also be arranged at the adsorption part.

In the present embodiments, the explanation was given with reference to a diesel engine, but the invention is not limited to this. The present invention can be applied to an internal combustion engine which is controlled so that the air-fuel ratio at the time of combustion becomes lean at the time of ordinary operation when the engine body outputs torque. For example, in a gasoline engine, the present invention can be applied to a lean burn engine which is controlled by a large combustion air-fuel ratio, an engine which engages in stratified combustion, etc. Alternatively, the present invention can be applied to an exhaust purification system of an internal combustion engine which oxidizes carbon monoxide in an oxygen rich atmosphere.

The above embodiments can be suitably combined. In the above-mentioned figures, the same or corresponding parts are assigned the same reference signs. Note that the above embodiments. are illustrative and do not limit the inventions. Further, in the embodiments, changes covered by the claims are intended.

### Reference Signs List

- 1: engine body
- 2: combustion chamber
- 12: exhaust pipe
- 13: exhaust treatment device
- 13a: upstream-side part
- 13b: downstream-side part
- 14a: first part
- 14b: second part
- 30: electronic control unit
- 51: adsorption part
- 51a: higher hydrocarbon adsorption part
- 51b: lower olefin adsorption part
- 52: oxidation part
- 55: base member
- 60: carrier
- 61: β-zeolite particles
- 62: catalyst particles
- 63: zeolite particles

## Claims

1. An exhaust purification system of an internal combustion engine which is controlled so that an air-fuel ratio at the time of combustion at the time of ordinary operation where an engine body outputs a torque becomes lean, the exhaust purification system of an internal combustion engine provided with
an adsorption part which adsorbs unburned fuel which is contained in exhaust gas when a temperature is less than a release temperature of the unburned fuel and releases the unburned fuel when the temperature is the release temperature of the unburned fuel or more and
an oxidation part which has catalyst particles of a metal which oxidizes carbon monoxide which is contained in the exhaust gas,
the adsorption part including zeolite which substantially adsorbs lower olefins which are contained in the exhaust gas, the adsorption part and the oxidation part being arranged so that the exhaust gas contacts the adsorption part, then contacts the oxidation part.

2. An exhaust purification system of an internal combustion engine as set forth in claim 1, wherein
the adsorption part and the oxidation part are stacked on the surface of a base member, and
the oxidation part is arranged at the side farther from an engine exhaust passage than the adsorption part.

3. An exhaust purification system of an internal combustion engine as set forth in claim 1, wherein
the adsorption part and the oxidation part are arranged along the direction of flow of the exhaust gas, and
the oxidation part is arranged at the downstream side from the adsorption part in the direction of flow of the exhaust gas.

4. An exhaust purification system of an internal combustion engine as set forth in claim 1, wherein
the adsorption part includes a higher hydrocarbon adsorption part which adsorbs higher hydrocarbons and a lower olefin adsorption part which adsorbs lower olefins, and
the higher hydrocarbon adsorption part and lower olefin adsorption part are arranged so that the exhaust gas contacts the higher hydrocarbon adsorption part, then contacts the lower olefin adsorption part.

5. An exhaust purification system of an internal combustion engine as set forth in claim 4, wherein
the higher hydrocarbon adsorption part includes β-zeolite, and
the lower olefin adsorption part includes zeolite which has exchanged ions with a metal.

6. An exhaust purification system of an internal combustion engine as set forth in claim 1, wherein
the metal particles of the oxidation part are mainly comprised of platinum.

7. An exhaust purification system of an internal combustion engine as set forth in claim 6, wherein
the metal particles of the oxidation part are formed substantially all from platinum.

8. An exhaust purification system of an internal combustion engine as set forth in claim 1, wherein
the zeolite which substantially adsorbs the lower olefins includes at least one of ZMS5 which has exchanged ions with iron and ZMS5 which has exchanged ions with silver.

9. An exhaust purification system of an internal combustion engine as set forth in claim 1, wherein
the catalyst particles of the metal of the oxidation part are comprised of metal particles other than metal particles which have an oxygen storage ability.
